# EUROPÄISCHE PATENTSCHRIFT

(11) **EP 1 813 150 B1**
(45) Veröffentlichungstag und Bekanntmachung des Hinweises auf die Patenterteilung: **28.03.2012**
(21) Anmeldenummer: 07001520.1
(22) Anmeldetag: 24.01.2007
(51) Int. Cl.: A01M 7/00, A01C 23/00

(54) **Spritzgestänge für Feldspritzen**
Sprayer boom for field sprayer
Rampe de pulvérisation pour pulvérisateur agricole

(30) Priorität: 26.01.2006 DE 102006003629; 12.01.2007 DE 102007001915
(43) Veröffentlichungstag der Anmeldung: 01.08.2007
(73) Patentinhaber: Lemken GmbH & Co. KG, 46519 Alpen (DE)
(72) Erfinder: Basten, Alexander, 54338 Schweich (DE); Dibbern, Axel, 24351 Damp (DE)
(74) Vertreter: Schulte, Jens Michael

(56) Entgegenhaltungen:
- EP-A1- 0 118 366
- EP-A1- 1 468 604
- WO-A1-00/15348
- WO-A1-2009/046723
- CH-A- 542 325
- DE-A1- 4 013 992

## Beschreibung

Die Erfindung betrifft ein Spritzgestänge für Feldspritzen mit einem Mittelteil und links und rechts am Mittelteil angeordneten Seitenteilen, die jeweils aus einer Teilsegmentgruppe mit Teilsegmenten bestehen, wobei das Spritzgestänge von einer großen Arbeitsbreite auf eine schmale Transportbreite bewegbar ausgebildet ist, indem mindestens zwei Teilsegmente einer Teilsegmentgruppe des jeweiligen Seitenteiles verschiebbar miteinander verbunden sind, wobei die Teilsegmente achsparallel und höhengleich zueinander verschiebbar in Arbeitsrichtung F hintereinander angeordnet sind.

Ein derartiges Spritzgestänge für Feldspritzen ist der deutschen Offenlegungsschrift 35 29 286 zu entnehmen. Bei diesem Spritzgestänge sind die Seitenteile schwenkbar bzw. klappbar über Klappgelenke mit dem Mittelteil verbunden. Die einzelnen Teilsegmente der Seitenteile sind untereinander ebenfalls über Klappgelenke miteinander verbunden. Diese Art der Klappung hat den Nachteil, dass während des Klappvorgangs große Torsionsmomente entstehen, die eine entsprechend stabile, steife und dadurch auch schwere Gestängekonstruktion erfordern. Aus der DE-OS 100 13 800 ist ein Spritzgestänge bekannt, bei dem die Teilsegmente teleskopierbar oder über ein Scherengitter untereinander verbunden sind. Aus der EP 0 118 633 B1 ist eine landwirtschaftlich verwendbare Zerstäubungsrampe, die vom Chassis einer Zerstäubungsvorrichtung getragen ist bekannt. Sie verfügt über mindestens zwei teleskopisch verbundene Rampen-Seitenelemente, wobei wenigstens eines dieser Elemente verstellbar ist. Hierzu wird eine Teleskopbewegung zwischen den Elementen ermöglicht, sodass sie achsparallel und höhengleich zueinander verstellbar positioniert sind. Diese Lösungen haben sich im Hinblick auf die auftretenden Kräfte wie die umständliche Ansteuerung der Düsen als nachteilig erwiesen. Dies bedingt in Verbindung mit angebauten Feldspritzen schon bei kleinen Flüssigkeitsbehältern einen hubstarken und schweren Traktor. In Verbindung mit gezogenen Feldspritzen wird dadurch aufgrund der gesetzlich und baulich begrenzten zulässigen Achslastwerte eine Zuladung großer Flüssigkeitsmengen verhindert. Entsprechend schwere Gestänge sind auch aufwendig und teuer und reduzieren dadurch die Wirtschaftlichkeit der Feldspritze. Feldspezifisch müssen häufig Teilbreiten der Feldspritze abgeschaltet werden, wozu dann ein Teilsegment oder mehrere Teilsegmente eingeklappt werden. Dies geschieht dann in Stufen von z. B. zwei Metern oder mehr. Um ein feinstufiges Abschalten von Teilbreiten zu ermöglichen, müssen entsprechend viele Teilsegmente vorgesehen werden, die auch noch einklappbar sein müssen. Dies verteuert zusätzlich das Spritzgestänge, insbesondere bei großen Arbeitsbreiten.

Der vorliegenden Erfindung stellt sich damit die Aufgabe, ein einfach bauendes Spritzgestänge für Feldspritzen zu schaffen, bei dem nur geringe Torsionsmomente beim Umstellen des Spritzgestänges von der Arbeits- in die Transportstellung und umgekehrt auftreten können und bei dem ein feinstufiges Abschalten von Teilbreiten ohne großen Aufwand möglich ist.

Diese Aufgabe wird dadurch gelöst, dass die Fahrtrichtungsachse und die Längsachse des durch die Teilsegmente gebildeten Pakets einen Winkel α kleiner als 90° bilden, was der Neigung des Pakets entspricht, um die Belastung der Gesamtvorrichtung zu reduzieren und insbesondere den Versatz der Düsen in Fahrtrichtung F auf ein zulässiges Maß zu beschränken und dass die Reduzierung der Gestängebreite von innen nach außen erfolgt.

Durch das Verschieben der einzelnen, höhengleich zueinander angeordneten Teilsegmente einer Teilsegmentgruppe werden die Torsionsmomente deutlich reduziert. Dies lässt eine entsprechend leichte und damit gewichtssparende Bauweise des Spritzgestänges zu. Außerdem können durch Verschiebewege einzelner Teilsegmente, die dem Abstand der Düsen des jeweiligen Spritzgestänges zueinander entsprechen, z. B. 50 cm, die Teilbreiten sehr feinstufig abgeschaltet werden. Die Teilsegmente sind hintereinander angeordnet, wodurch ein einfaches und leichtgängiges Verschieben der einzelnen Teilsegmente ermöglicht wird. Die einzelnen Teilsegmente sind vorzugsweise identisch ausgebildet, so dass sich eine besonders kompakte Bauweise für den Arbeits- wie den Transportzustand ergibt.

Die Erfindung sieht weiter vor, dass die Teilsegmente einer Teilsegmentgruppe vorzugsweise in Arbeitsrichtung hintereinander angeordnet sind. Dies lässt eine einfache Unterbringung der Flüssigkeitsleitungen zu und stellt auch sicher, dass die Düsenkörper mit Düsen ohne großen Aufwand auf gleichen Abstand zum Boden angeordnet werden können. Denkbar ist auch, die Teilsegmente unter- oder übereinander anzuordnen. Durch z. B. unterschiedlich angeordnete Düsenstöcke müsste dann aber der Abstand der einzelnen Düsen zum Boden egalisiert werden.

Erfindungsgemäß ist weiter vorgesehen, dass die Teilsegmente im Verschiebebereich mit inneren und äußeren Führungselementen mit Gleitführungen ausgerüstet sind, über die sie manuell oder mittels Fremdkraft verschiebbar geführt miteinander verbunden sind. Dadurch wird ein einfaches und leichtgängies Verschieben der einzelnen Teilsegmente möglich. Dies kann z. B. per Elektromotor oder Hydraulikmotor mit Ritzel erfolgen, bei dem das Ritzel in eine Zahnstange, Gliederkette oder Lochreihe im jeweiligen Teilsegment eingreift. Denkbar ist auch ein Seilzugsystem, bei dem über Fremdkraft und über Umlenkrollen die Teilsegmente einer Teilsegmentgruppe verschoben werden können. Die Flüssigkeitsleitungen der einzelnen Teilsegmente werden über Schlauchleitungen verbunden, die beim Verschieben der Teilsegmente in die Transportstellung aufgerollt oder über so genannte Energieketten geführt aufgerollt oder abgelegt werden.

Ein besonders geeignetes Linearführungssystem zwischen benachbarten Teilsegmenten sieht vor, dass die Teilsegmente im Verschiebebereich mit Rollen als Führungselemente ausgerüstet sind. Zweckmäßigerweise ist jedes C-förmige Teilsegment mit solchen, z.B. paarweise angeordneten Rollen versehen, um hierüber die Verschiebemöglichkeit gegenüber dem benachbarten Teilsegment zu gewährleisten.

Eine gute Verschiebbarkeit kann auch erreicht werden, wenn die Teilsegmente ein C-förmiges Profil aufweisen. Diese Art von Grundprofil mit einem langen und zwei kurzen Schenkeln gewährleistet einerseits die notwendige Robustheit und andererseits, benachbarte Profile so weit wie möglich gegeneinander verschieben zu können, wobei die für das Verschieben notwendigen Einrichtungen gut am bzw. in dem C-förmigen Profil untergebracht werden können.

Insbesondere in Verbindung mit Rollen ist es vorteilhaft, wenn die Rollen an der Rückseite der C-förmigen Profile vorgesehen sind, so dass die Rollen jeweils von dem benachbarten Profil aufgenommen werden können. Aufgrund der Geometrie des Profils ist damit nicht nur ein hohes Maß an Stabilität erreicht, sondern die auftretenden Kräfte und Momente können auch in besonders geeigneter Weise aufgenommen werden.

Korrespondierend zu den Rollen an der Rückseite der benachbarten Profile ist daran gedacht, dass an der Innenseite der C-förmigen Profile Führungen für die Rollen des benachbarten C-förmigen Profils vorgesehen sind. Diese Führungen sind zweckmäßigerweise einander gegenüber liegend an den kurzen Schenkeln des Profils angeordnet. Bei diesen Profilen handelt es sich beispielsweise um eckig ausgebildete Hohlprofile, die als Schienen für die Rollen dienen oder aber denen solche Schienen als separates Bauteil zugeordnet sind.

Eine weitere vorteilhafte Ausführungsform der Erfindung sieht vor, dass die Teilsegmente an ihrer Unterseite Düsen und/oder Leitungen zu den Düsen aufweisen. Unterhalb des C-Profils schließen sich daher die Düsen an, die in einem separaten Gehäuseteil untergebracht sein können.

Die Flüssigkeitsleitungen der einzelnen Teilsegmente werden über Schlauchleitungen verbunden, die sich beim Verschieben der Teilsegmente auf-und abrollen. Daher ist vorgesehen, dass die Teilsegmente vorzugsweise an ihrer Oberseite Führungen für die Versorgungsschläuche aufweisen, um zu gewährleisten, dass sich die Schläuche beim Verschieben der Segmente gegeneinander nicht verdrehen bzw. nicht abreißen können.

Hierzu dienen einerseits seitlich auf den Teilsegmenten angeordnete Führungen in Form von Stegen, die an der Oberseite des C-Profils angeordnet sind.

Ergänzend oder alternativ dazu ist vorgesehen, dass als Führungen bogenförmig ausgebildete Bleche dienen. Diese Bleche sind durch ihre Bogenform den sich auf- und abrollenden Schläuchen ideal angepasst und bilden eine Kulisse, in der sich die Schläuche beim Zusammenschieben oder Auseinanderziehen der Teilsegmente führen lassen.

Diese Wirkung wird unterstützt, indem die bogenförmigen Führungen paarweise gegenüberliegend und/oder versetzt zueinander an den jeweiligen Teilsegmenten angeordnet sind.

Es gilt, in Arbeits- wie in Transportstellung eine möglichst geringe Belastung des Spritzgestänges, wie aber auch des Zugfahrzeugs zu erreichen. Der Versatz des Spritzgestänges sollte daher möglichst gering sein. Deswegen wird vorgeschlagen, dass das Spritzgestänge mit einer Neigungsverstellung zur Reduzierung des Versatzes ausgerüstet ist. Der Winkel zwischen den Längsachsen der Teilsegmente und der Fahrtrichtungsachse ist also kleiner als 90° bemessen.

Um ein eventuelles Anfahren eines Hindernisses mit ganz oder teilweise ausgefahrenem Spritzgestänge zu verhindern, dass Letzteres beschädigt wird, ist am äußeren Ende der Teilsegmentgruppe ein klappbares Segment in Form eines Ausweichsegmentes vorgesehen, das beim Anfahren eines Hindernisses diesem ausweicht. Daher wird vorgeschlagen, dass die Reduzierung der Gestängebreite von innen nach außen erfolgt, so dass stets das ausweichbar ausgebildete äußere Segment den äußeren Abschluss des Spritzgestänges bildet.

Eingefahrene Segmente sind erfindungsgemäß hintereinander auf gleicher Höhe positioniert, um die Größe des entsprechenden Pakets auf ein Minimum zu beschränken. Es empfiehlt sich daher, dass die Düsen mit einer Einzeldüsensteuerung ausgerüstet sind, damit die Düsen im Falle des Überlappens der Segmente einzeln oder segmentweise angesteuert bzw. abgeschaltet werden können. Die Reduzierung der Gestängebreite könnte dabei konturgenau z. B. über ein GPS-Signal erfolgen, jede Reduzierung könnte dabei eine Düsenschaltfunktion zugeordnet sein. Letztlich kann damit das komplette Spritzenmanagement weitgehend automatisiert werden, indem eine konturgenaue Applikation erfolgt, die Hindernisse selbsttätig erkannt werden und eine Kollision durch entsprechend vorausschauende Reduzierung der Gestängebreite vermieden wird, dies auch in Zusammenhang mit dem Vorgewendemanagement. Am Vorgewende können die Düsen wie üblich abgeschaltet werden, ohne die Gestängebreite verändern zu müssen. Betriebsgemeinschaften und Lohnunternehmungen können dann flexibel auf die jeweiligen Gegebenheiten eines jeden Betriebs reagieren. Bereits bei der Erkennung der Parzelle wären Gestängebreite und Teilbreitenaufteilung identifiziert und eingestellt.

All dies ist auf besonders einfache Weise möglich, wenn die Steuerung der Düsen pneumatisch erfolgt. Dabei ist auch eine günstige Variante durch Blindkappen denkbar.

Eine Begrenzung der Verschiebbarkeit der einzelnen Teilsegmente zueinander ist realisiert, wenn der Linerführung der Teilsegmente Anschläge, vorzugsweise als Anschläge dienende Bolzen zugeordnet sind. Alternativen zu einem Anschlag sehen auch form- oder kraftschlüssige Verbindungen vor.

Die Erfindung zeichnet sich insbesondere dadurch aus, dass ein Spritzgestänge für Feldspritzen geschaffen ist, bei dem aufgrund der besonders vorteilhaften Verschiebemöglichkeit zwischen den einzelnen Teilsegmenten aber auch wegen der diversen Einstellmöglichkeiten der Gesamtvorrichtung eine besonders geringe Belastung des Gestänges wie des Zugfahrzeugs gegeben ist. Vielmehr lässt sich das Spritzgestänge den Gegebenheiten vor Ort ideal anpassen, indem Teilbreiten ein- und abgeschaltet werden können bzw. sich die Segmente der einzelnen Teilsegmentgruppen leicht ein- und ausfahren und auch fest einstellen lassen. Das Spritzenmanagement lässt sich leicht einstellen und weitgehend automatisieren, indem Hindernisse selbsttätig erkannt werden, woraufhin es zum Verschieben der Teilsegmente und einem Abschalten der Düsen einzeln oder in Bezug auf die abgeschalteten Segmente kommt. Die leichte Verschiebbarkeit wird durch die achsparallele und höhengleiche Anordnung benachbarter Teilsegmente über eine Rollen-/Schienen-Konstruktion erreicht.

Weitere Einzelheiten und Vorteile des Erfindungsgegenstandes ergeben sich aus der nachfolgenden Beschreibung und den zugehörigen Zeichnungen, in denen ein Ausführungsbeispiel mit den dazu notwendigen Einzelheiten und Einzelteilen dargestellt ist. Es zeigen:
- Fig. 1: das Spritzgestänge in Draufsicht in Arbeitstellung,
- Fig. 2: einen Schnitt durch das Spritzgestänge,
- Fig. 3: eine Teilsegmentgruppe im eingefahrenen Zustand in Vorderansicht,
- Fig. 4: den Schnitt C-C gem. Fig. 3,
- Fig. 5: eine Teilsegmentgruppe in Draufsicht,
- Fig. 6: den Schnitt B-B gem. Fig. 5,
- Fig. 7: eine perspektivische Ansicht einer eingeklappten Teilsegmentgruppe,
- Fig. 8: ein komplettes Spritzgestänge, einseitig eingeklappt,
- Fig. 9: ein Teilsegment in Vorderansicht,
- Fig. 10: ein Teilsegment in Draufsicht, und
- Fig. 11: ein Teilsegment im Schnitt.

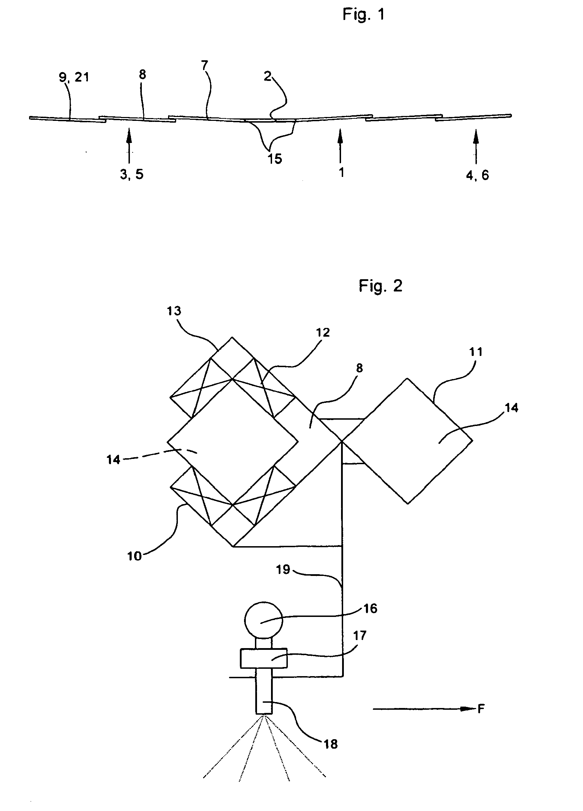

Fig. 1 zeigt eine grob vereinfachte Skizze des Spritzgestänges 1 in Arbeitsstellung. Das Spritzgestänge 1 besteht aus einem Mittelteil 2 und Seitenteilen 3 und 4. Die Seitenteile 3 und 4 sind über Klappgelenke 15 mit dem Mittelteil 2 verbunden. Die Seitenteile 3, 4 selbst bestehen aus Teilsegmentgruppen 5, 6. In dieser Darstellung weist das jeweilige Seitenteil 3, 4 drei Teilsegmente 7, 8, 9 auf. Das Teilsegment 8 ist mit dem einen Ende mit seinem inneren Führungselement 11 mit dem äußeren Führungselement 10 des Teilsegmentes 7 verbunden und mit seinem anderen Ende mit seinem äußeren Führungselement 10 mit dem inneren Führungselement 11 des Teilsegmentes 9 verbunden. Die jeweils äußeren Teilsegmente, hier die Teilsegmente 9, sind als Ausweichsegmente 21 ausgebildet.

Fig. 2 zeigt den Schnitt durch das Spritzgestänge 1 im Bereich der Führungselemente 10, 11. Das jeweilige Teilsegment 8, 9 wird mit seinem inneren Führungselement 11 jeweils in das äußere Führungselement 10 des benachbarten Teilsegmentes 7, 8 gesteckt. Die Führungselemente 10, 11 weisen Gleitführungen 12 auf, die ein leicht gängiges Verschieben der Teilsegmente 7, 8, 9 sicherstellen. In diesem Ausführungsbeispiel ist das äußere Führungselement 10 als offenes Profil 13 ausgebildet und das innere Führungselement 11 als Hohlprofil 14. Die Hohlprofilform ist so gewählt, dass auch bei breitem Spritzgestänge das Spritzgestänge ausgesteift bleibt und nicht durchhängt. Unterhalb des hier dargestellten Teilsegmentes 8 ist die Flüssigkeitsleitung 16 mit dem Düsenstock 17 und den Düsen 18 angeordnet. Die Flüssigkeitsleitung 16 wird durch Halterahmen 19 jeweils endseitig der Teilsegmente mit diesen verbunden. Dabei sind die Halterahmen 19 so mit dem Teilsegmenten 7, 8, 9 befestigt, dass sie beim Verschieben der einzelnen Teilsegmente 8, 9 nicht mit Teilen der Führungselemente, Gleitführungen usw. kollidieren können. Die Arbeitsrichtung ist mit F bezeichnet.

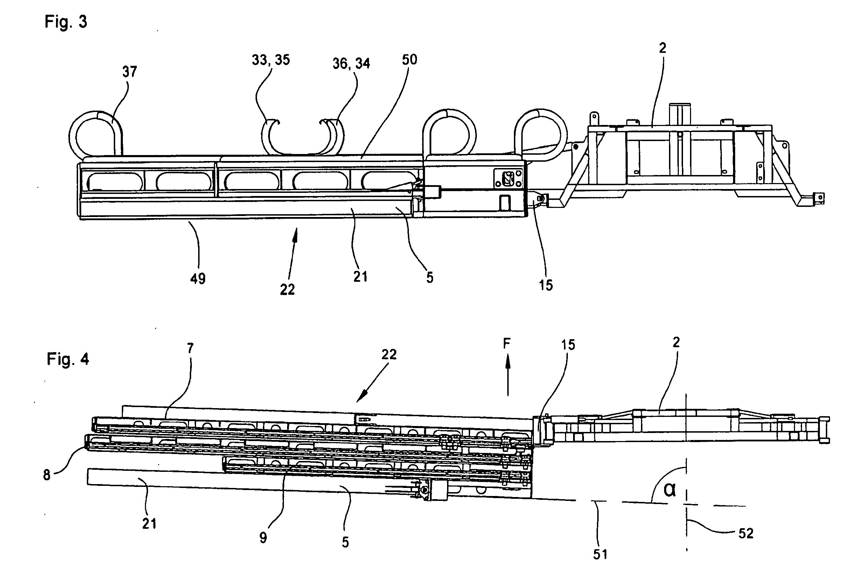

In Fig. 3 ist das Spritzgestänge 1 im eingefahrenen, aber noch nicht eingeklappten Zustand dargestellt, in dem das Teilsegment 21 und die verdeckten Teilsegmente 7, 8, 9 hintereinander angeordnet sind und so das Paket 22 bilden. Dieses Paket 22 ist über das Klappgelenk 15 mit dem Mittelteil 2 verbunden. Zu erkennen sind an der Oberseite 50 der verdeckten Teilsegmente 7, 8, 9 die Führungen 33, 34, 35, 36 und 37 für die hier nicht dargestellten Versorgungsschläuche. An der Unterseite 49 der Teilsegmente befinden sich die hier nicht dargestellten Düsen.

Einen Schnitt durch die Darstellung gemäß Fig. 3 zeigt Fig. 4 mit den hintereinander angeordneten bzw. ineinander geschobenen Teilsegmenten 7, 8 und 9 sowie dem Ausweichsegment 21. Die Fahrtrichtungsachse 52 und die Längsachse 51 des durch die Teilsegmente 7, 8, 9 gebildeten Pakets 22 bilden einen Winkel α kleiner als 90°, was der Neigung des Pakets 22 entspricht, um den Versatz und damit die Belastung der Gesamtvorrichtung zu reduzieren und insbesondere den Versatz der Düsen in Fahrtrichtung F auf ein zulässiges Maß zu beschränken.

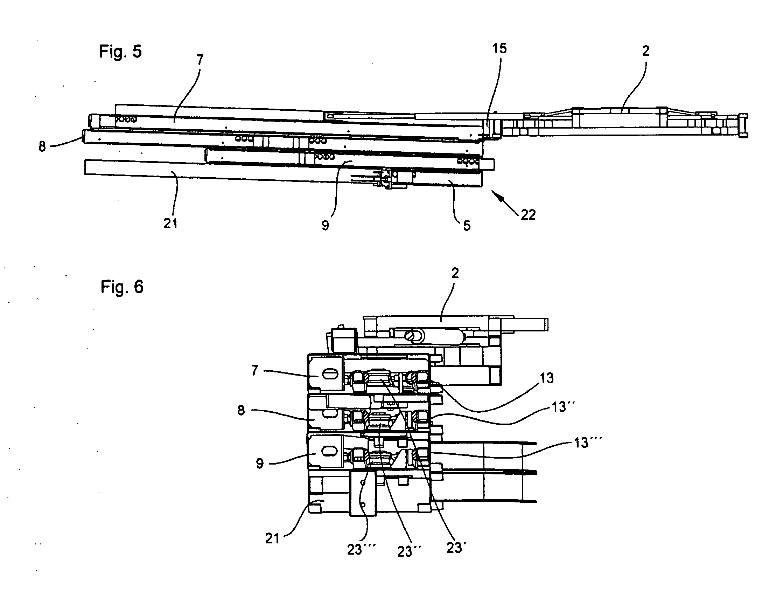

Eine weitere Darstellung zeigt in Fig. 5 das durch die Teilsegmente 7, 8, 9 sowie das Ausweichsegment 21 gebildete Paket 22, angeschlossen an das Mittelteil 2.

Einen Schnitt durch dieses Paket zeigt Fig. 6, wobei die Teilsegmente 7, 8, 9, gebildet durch die Profile 13, 13', 13" gut zu erkennen sind. Ein Profil 13, 13', 13" nimmt dabei jeweils die Rolle 23', 23", 23'" des benachbarten Profils auf.

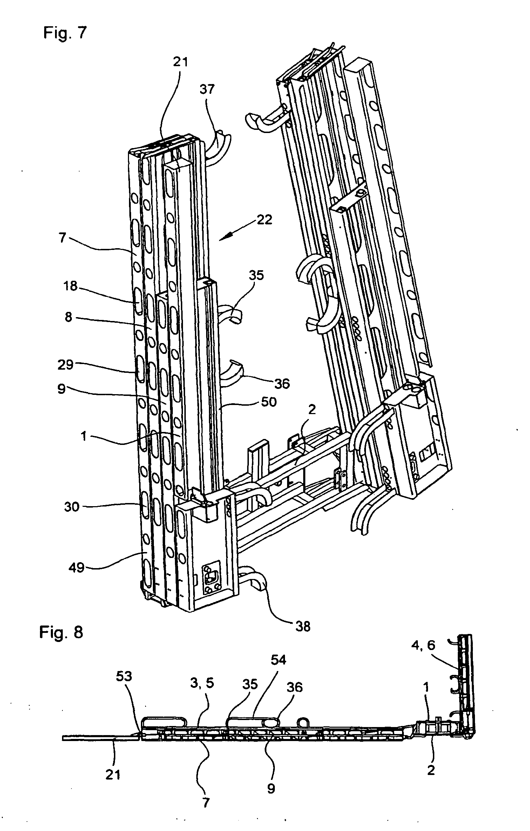

Eine perspektivische Darstellung des jetzt eingeklappten Pakets 22 zeigt Fig. 7 und somit das Spritzgestänge 1 in Transportstellung. Erkennbar sind die Düsen 18, 29, 30 an der Unterseite 49 der Segmente 7, 8, 9 sowie die Führungen 35, 36, 37 und 38 an der Oberseite 50.

Fig. 8 veranschaulicht einerseits die Variabilität des erfindungsgemäßen Spritzgestänges 1, bestehend aus den Seitenteilen 3, 5 und 4, 6. Erst genannte Teilsegmentgruppe ist hier im ausgefahrenen Zustand mit den ausgefahrenen Teilsegmenten 7, 8, 9 und dem aus Sicherheitsgründen um das Klappgelenk 53 einklappbaren Ausweichsegment 21 für den Fall des Auftreffens auf ein Hindernis. Andererseits ist die Teilsegmentgruppe 4, 6 eingefahren und eingeklappt. Mit dem Bezugszeichen 54 ist der Versorgungsschlauch bezeichnet, der sich hier zwischen den Führungen 35 und 36 im ausgefahrenen Zustand erstreckt.

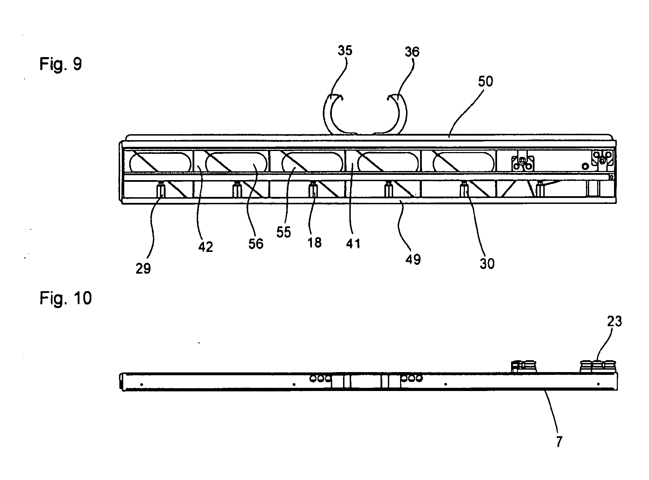

Fig. 9 zeigt ein einzelnes Teilsegment 7 mit den Führungen 35 und 36 in Bogenform an der Oberseite 50 und den Düsen 18, 29, 30 an der Unterseite 49. Dazwischen sind die Rippenverstärkungen 41, 42 bzw. die Öffnungen 55, 56 zu erkennen, um zu einer Gewichtsreduzierung des Segmentes 7 beizutragen.

Eine Draufsicht zu Fig. 9 zeigt Fig. 10, wobei besonders gut die Rollen 23 zu erkennen sind, die zur Verschieblichkeit des Segmentes 7 mit dem hier nicht dargestellten Nachbarsegment dienen.

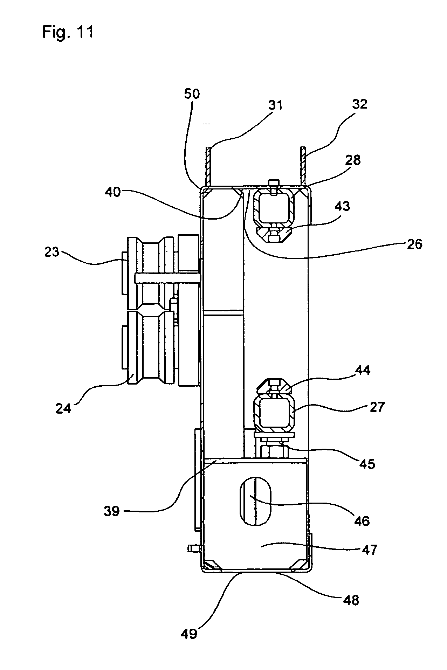

Diese Funktion veranschaulicht insbesondere Fig. 11. Das Grundprofil ist C-förmig ausgebildet und weist an seiner Rückseite 25 Rollen 22, 24 auf, welche in einem hier nicht dargestellten Profil achsparallel und auf gleicher Höhe geführt werden. An der Innenseite 26 des C-förmigen Profils 13 befinden sich eine untere und eine obere Führung 27, 28, die an den kurzen Schenkeln 39, 40 des C-förmigen Profils 13 befestigt sind. Schienen 43, 44 sind an den Innenseiten der Führungen 27, 28 positioniert, um, korrespondierend zu den Rollen ausgebildet, deren Lauf und damit die Verschieblichkeit benachbarter Segmente gegeneinander zu gewährleisten. Unterhalb der Führung 27 befindet sich eine einstellbare Abstützung 45, um Anpassungen vornehmen zu können. Während sich an der Oberseite 50 des Profils 13 Führungen 31, 32 zur seitlichen Führung der Schläuche befinden, ist unterhalb des C-förmigen Profils 13 das Gehäuse für die Düsen untergebracht. Hier befindet sich ein entsprechender Freiraum 47 und ein Durchlass 48 in dem Profil für die hier nicht dargestellten Düsen. Mit 46 ist eine Durchgangsöffnung für die Flüssigkeitsrohre bezeichnet.

Alle genannten Merkmale, auch die den Zeichnungen allein zu entnehmenden, werden allein und in Kombination als erfindungswesentlich angesehen.

## Patentansprüche

1. Spritzgestänge (1) für Feldspritzen mit einem Mittelteil (2) und links und rechts am Mittelteil (2) angeordneten Seitenteilen (3, 4), die jeweils aus einer Teilsegmentgruppe (5, 6) mit Teilsegmenten (7, 8, 9) bestehen, wobei das Spritzgestänge (1) von einer großen Arbeitsbreite auf eine schmale Transportbreite bewegbar ausgebildet ist, indem mindestens zwei Teilsegmente (7, 8) einer Teilsegmentgruppe (5, 6) des jeweiligen Seitenteiles (3, 4) verschiebbar miteinander verbunden sind, wobei die Teilsegmente (7, 8) achsparallel und höhengleich zueinander verschiebbar und in Arbeitsrichtung F hintereinander angeordnet sind, wobei die Reduzierung der Gestängebreite von innen nach außen erfolgt,
**dadurch gekennzeichnet,**
**dass** die Fahrtrichtungsachse (52) und die Längsachse (51) des durch die hintereinander angeordneten bzw. ineinander geschobenen Teilsegmente (7, 8, 9) gebildeten Paketes (22) einen Winkel α kleiner als 90° bilden, was der Neigung des Pakets (22) entspricht, um die Belastung der Gesamtvorrichtung zu reduzieren und insbesondere den Versatz der Düsen in Fahrtrichtung F auf ein zulässiges Maß zu beschränken.

2. Spritzgestänge nach Anspruch 1,
**dadurch gekennzeichnet,**
**dass** die jeweils äußeren Teilsegmente als Ausweichsegmente (21) ausgebildet sind.

3. Spritzgestänge nach Anspruch 1,
**dadurch gekennzeichnet,**
**dass** die Teilsegmente (7, 8, 9) im Verschiebebereich mit inneren und äußeren Führungselementen (10, 11) mit Gleitführungen (12) ausgerüstet sind, über die sie manuell oder mittels Fremdkraft verschiebbar geführt miteinander verbunden sind.

4. Spritzgestänge nach Anspruch 1,
**dadurch gekennzeichnet,**
**dass** die Teilsegmente (7, 8) im Verschiebebereich mit Rollen (23, 24) als Führungselemente ausgerüstet sind.

5. Spritzgestänge nach Anspruch 1,
**dadurch gekennzeichnet,**
**dass** die Teilsegmente (7, 8) ein C-förmig ausgebildetes Profil (13) aufweisen.

6. Spritzgestänge nach Anspruch 5,
**dadurch gekennzeichnet,**
**dass** die Rollen (23, 24) an der Rückseite (25) der C-förmigen Profile (13) vorgesehen sind.

7. Spritzgestänge nach Anspruch 6,
**dadurch gekennzeichnet,**
**dass** an der Innenseite (26) der C-förmigen Profile (13) Führungen (27, 28) für die Rollen des benachbarten C-förmigen Profils (13') vorgesehen sind.

8. Spritzgestänge nach Anspruch 1,
**dadurch gekennzeichnet,**
**dass** die Teilsegmente (7, 8, 9) an ihrer Unterseite (49) Düsen (18, 29, 30) und/oder Leitungen zu den Düsen (18, 29, 30) aufweisen.

9. Spritzgestänge nach Anspruch 1,
**dadurch gekennzeichnet,**
**dass** die Teilsegmente (7, 8, 9) vorzugsweise an ihrer Oberseite (50) Führungen (31, 32, 33, 34) für die Versorgungsschläuche (45) aufweisen.

10. Spritzgestänge nach Anspruch 9,
**dadurch gekennzeichnet,**
**dass** seitlich auf den Teilsegmenten (7, 8, 9) Führungen (31, 32) angeordnet sind.

11. Spritzgestänge nach Anspruch 9,
**dadurch gekennzeichnet,**
**dass** als Führungen (33, 34) bogenförmig ausgebildete Bleche (33 bis 38) dienen.

12. Spritzgestänge nach Anspruch 11,
**dadurch gekennzeichnet,**
**dass** die Bleche (33 bis 38) paarweise gegenüberliegend und/oder versetzt zueinander an den jeweiligen Teilsegmenten (7, 8, 9) angeordnet sind.

13. Spritzgestänge nach Anspruch 1,
**dadurch gekennzeichnet,**
**dass** das Spritzgestänge (1) mit einer Neigungsverstellung zur Reduzierung des Versatzes ausgerüstet ist.

14. Spritzgestänge nach Anspruch 1,
**dadurch gekennzeichnet,**
**dass** die Düsen (18, 29, 30) mit einer Einzeldüsensteuerung ausgerüstet sind.

15. Spritzgestänge nach Anspruch 14,
**dadurch gekennzeichnet,**
**dass** die Steuerung der Düsen (18, 29, 30) pneumatisch erfolgt.

16. Spritzgestänge nach Anspruch 1,
**dadurch gekennzeichnet,**
**dass** der Linearführung der Teilsegmente (7, 8, 9) Anschläge, vorzugsweise als Anschläge dienende Bolzen zugeordnet sind.

## Claims

1. A spray rod assembly (1) for field spraying with a central part (2) and arranged on the left and right of the central part (2) side parts (3, 4), which side parts (3, 4) respectively comprise a part segment group (5, 6) with part segments (7, 8, 9), wherein the spray rod assembly (1) is formed to be movable from a large working width to a narrow transport width by slidably connecting at least two part segments (7, 8) of a part segment group (5, 6) of the respective side part (3, 4), wherein the part segments (7, 8) are slidably arranged with respect to one another axially parallel and at equal height and are disposed one behind the other in the working direction F, wherein the reduction of the rod assembly width is made from the inside outwards,
**characterised in that**
the axis of the direction of travel (52) and the longitudinal axis (51) of the package (22), which is formed by the part segments (7, 8, 9) being disposed one behind the other or inserted inside one another, form an angle α of less than 90°, which corresponds to the incline of the package (22), in order to reduce the load of the overall apparatus and particularly the offset of the nozzles in the direction of travel F to an admissible measurement.

2. Spray rod assembly according to claim 1,
**characterised in that**
the respectively outer part segments are formed as alternative segments (21)

3. Spray rod assembly according to claim 1,
**characterised in that**
the part segments (7, 8, 9) in the sliding region with internal and external guiding elements (10, 11) are equipped with sliding guides (12), by which they are connected to each other slidably guided by means of manual or external force.

4. Spray rod assembly according to claim 1,
**characterised in that**
the part segments (7, 8) are equipped in the sliding region with rollers (23, 24) as guide elements.

5. Spray rod assembly according to claim 1,
**characterised in that**
the part segments (7, 8) have a C-shaped profile (13).

6. Spray rod assembly according to claim 5,
**characterised in that**
the rollers (23, 24) are provided on the reverse (25) of the C-shaped profiles (13).

7. Spray rod assembly according to claim 6,
**characterised in that**
on the inner side (26) of the C-shaped profiles (13) guides (27, 28) are provided for the rollers of the adjacent C-shaped profile (13').

8. Spray rod assembly according to claim 1,
**characterised in that**
the part segments (7, 8, 9) have on their underside (49) nozzles (18, 29, 30) and/or lines to the nozzles (18, 29, 30).

9. Spray rod assembly according to claim 1,
**characterised in that**
the part segments (7, 8, 9) preferably have on their upper side (50) guides (31, 32, 33, 34) for the supply lines (45).

10. Spray rod assembly according to claim 9,
**characterised in that**
guides (31, 32) are arranged laterally on the part segments (7, 8, 9).

11. Spray rod assembly according to claim 9,
**characterised in that**
arched metal sheets (33 to 38) act as guides (33, 34).

12. Spray rod assembly according to Claim 11,
**characterised in that**
the metal sheets (33 to 38) are arranged in pairs opposite and/or offset with respect to one another on the respective part segments (7, 8, 9).

13. Spray rod assembly according to claim 1,
**characterised in that**
the spray rod assembly (1) is equipped with an angle adjusting means for the purpose of reducing the offset.

14. Spray rod assembly according to claim 1,
**characterised in that**
the nozzles (18, 29, 30) are equipped with an individual nozzle controlling means.

15. Spray rod assembly according to Claim 14,
**characterised in that**
the control of the nozzles (18, 29, 30) takes place pneumatically.

16. Spray rod assembly according to claim 1,
**characterised in that**
stops, preferably bolts acting as stops, are assigned to the linear guide of the part segments (7, 8, 9).

## Revendications

1. Tringlerie de pulvérisation (1) pour pulvérisation de champ avec une partie centrale (2) et des pièces latérales (3, 4) disposées à gauche et à droite de la partie centrale (2), pièces latérales qui se composent respectivement d'un groupe de sous-segments (5, 6) avec des sous-segments (7, 8, 9), étant donné que la tringlerie de pulvérisation (1) est formée de manière à pouvoir être déplacée d'une grande largeur de travail à une étroite largeur de transport par le fait qu'au moins deux sous-segments (7, 8) d'un groupe de sous-segments (5, 6) de la pièce latérale (3, 4) respective sont reliés l'un avec l'autre de manière décalable, étant donné que les sous-segments (7, 8) sont décalables sur des axes parallèles et à hauteur égale l'un par rapport à l'autre et sont disposés l'un derrière l'autre dans le sens de travail F, étant donné que la réduction de la largeur de tringlerie se fait de l'intérieur vers l'extérieur,
**caractérisée en ce que**
l'axe de sens de déplacement (52) et l'axe longitudinal (51) du paquet (22) formé par les sous-segments disposés l'un derrière l'autre ou poussés l'un dans l'autre (7, 8, 9) forment un angle α inférieur à 90°, ce qui correspond à l'inclinaison du paquet (22), afin de réduire la charge du dispositif entier et en particulier de limiter le décalage des buses dans le sens de déplacement F à une valeur admissible.

2. Tringlerie de pulvérisation selon la revendication 1,
**caractérisée en ce que**
les sous-segments respectivement extérieurs sont formés comme segments alternatifs (21).

3. Tringlerie de pulvérisation selon la revendication 1,
**caractérisée en ce que**
les sous-segments (7, 8, 9) sont équipés dans la zone de décalage d'éléments de guidage intérieurs et extérieurs (10, 11) avec guides coulissants (12) au moyen desquels ils peuvent être reliés l'un à l'autre manuellement ou par force étrangère par guidage décalable.

4. Tringlerie de pulvérisation selon la revendication 1,
**caractérisée en ce que**
les sous-segments (7, 8) sont équipés dans la zone de décalage de rouleaux (23, 24) tenant lieu d'éléments de guidage.

5. Tringlerie de pulvérisation selon la revendication 1,
**caractérisée en ce que**
les sous-segments (7, 8) présentent un profil en forme de C (13).

6. Tringlerie de pulvérisation selon la revendication 5,
**caractérisée en ce que**
les rouleaux (23, 24) sont prévus à l'arrière (25) des profils en forme de C (13).

7. Tringlerie de pulvérisation selon la revendication 6,
**caractérisée en ce que**
des guides (27, 28) sont prévus sur la face intérieure (26) des profils en forme de C (13) pour les rouleaux du profil en forme de C (13') voisin.

8. Tringlerie de pulvérisation selon la revendication 1,
**caractérisée en ce que**
les sous-segments (7, 8, 9) présentent à leur face inférieure (49) des buses (18, 29, 30) et/ou des conduites vers les buses (18, 29, 30).

9. Tringlerie de pulvérisation selon la revendication 1,
**caractérisée en ce que**
les sous-segments (7, 8, 9) présentent de préférence à leur face supérieure (50) des guides (31, 32, 33, 34) pour les tuyaux d'alimentation (45).

10. Tringlerie de pulvérisation selon la revendication 9,
**caractérisée en ce que**
sont disposés latéralement sur les sous-segments (7, 8, 9) des guides (31, 32).

11. Tringlerie de pulvérisation selon la revendication 9,
**caractérisée en ce que**
des tôles arquées (33 à 38) servent de guides (33, 34).

12. Tringlerie de pulvérisation selon la revendication 11,
**caractérisée en ce que**
les tôles (33 à 38) sont disposées en paires l'une en face de l'autre et/ou décalées l'une par rapport à l'autre sur les sous-segments (7, 8, 9) respectifs.

13. Tringlerie de pulvérisation selon la revendication 1,
**caractérisée en ce que**
la tringlerie de pulvérisation (1) est équipée d'un dispositif de réglage d'inclinaison pour la réduction du décalage.

14. Tringlerie de pulvérisation selon la revendication 1,
**caractérisée en ce que**
les buses (18, 29, 30) sont équipées d'une commande de buse individuelle.

15. Tringlerie de pulvérisation selon la revendication 14,
**caractérisée en ce que**
la commande des buses (18, 29, 30) se fait par voie pneumatique.

16. Tringlerie de pulvérisation selon la revendication 1,
**caractérisée en ce que**
sont affectées à la coulisse linéaire des sous-segments (7, 8, 9) des butées, de préférence des boulons servant de butées.
